# EUROPEAN PATENT APPLICATION

(11) **EP 4 120 099 A1**
(43) Date of publication of application: **18.01.2023**
(21) Application number: 21185512.7
(22) Date of filing: 14.07.2021
(51) Int. Cl.: G06F 16/683

(54) **APPARATUS FOR PROCESSING FINGERPRINT HASHES OF AUDIO STREAM**

(71) Applicant: Utopia Music AG, 6300 Zug (CH)
(72) Inventor: Wahlgren, Linus, 6300 Zug (CH); Flach, Max, 6300 Zug (CH)
(74) Representative: Kolster Oy Ab

(57) **Abstract**

An apparatus (150) for processing fingerprint hashes of an audio stream. The apparatus includes: one or more hardware caches (114, 124), each hardware cache (114, 124) configured to store one or more files (116, 126), each file (116, 126) containing a part (118, 128) of a fixed size continuous data structure (122), and the fixed size continuous data structure (122) containing fixed size data items (120, 130), each fixed size data item (120, 130) representing a stored unique fingerprint hash; one or more random access memories (108); and one or more processors (102). The one or more processors (102) are configured to cause performance of at least the following: obtaining (162) generated fingerprint hashes of an audio stream (152); matching (164) recursively each generated fingerprint hash (110) of the audio stream (152) against stored unique fingerprint hashes (112) of the tracks using match time offsets between the audio stream and each track in order to identify the audio stream; wherein the matching (164) comprises retrieving (172), into the one or more random access memories (108) from one of the one or more files (116, 126), each stored unique fingerprint hash (112) addressed by each generated fingerprint hash (110) and represented by each fixed size data item (120, 130).

## Description

### FIELD

Various embodiments relate to an apparatus for processing fingerprint hashes of an audio stream.

### BACKGROUND

Fingerprint hashes generated from an audio stream are used to recognize tracks (= a song, a musical work, a podcast, or another type of audio, and even an audio embedded within a video stream such as a movie, television show, or a video clip, for example). The audio stream may originate from a radio broadcast, or from streaming media, for example.

A plurality of fingerprint hashes may be detected from the audio stream, and then compared with a database containing fingerprint hashes of numerous tracks. One well-known audio recognition algorithm is Shazam.

In order to run an audio recognition algorithm in a global scale covering numerous audio stream sources requires very efficient processing, also for the database operations.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1A and FIG. 1B illustrate embodiments of an apparatus for processing fingerprint hashes of an audio stream; and
FIG. 2A, FIG. 2B, FIG. 2C, and FIG. 2D illustrate embodiment of a fixed size continuous data structure used in the processing of the fingerprint hashes.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

Note that a co-pending patent application (number to be filled after filing at the same date as the present patent application at the EPO) by the applicant describes various details relating to the processing of the audio stream is incorporated herein by reference for all purposes in all jurisdictions where applicable.

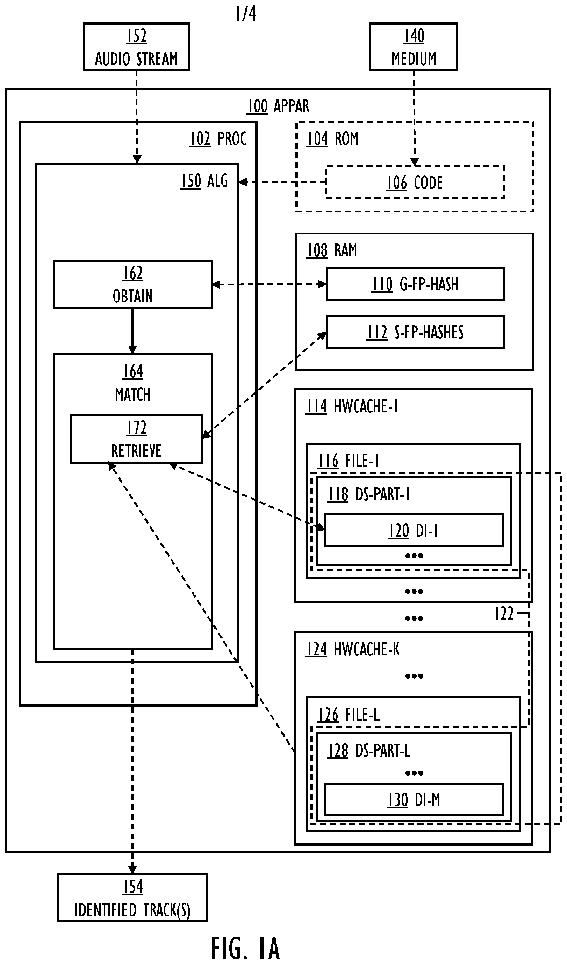

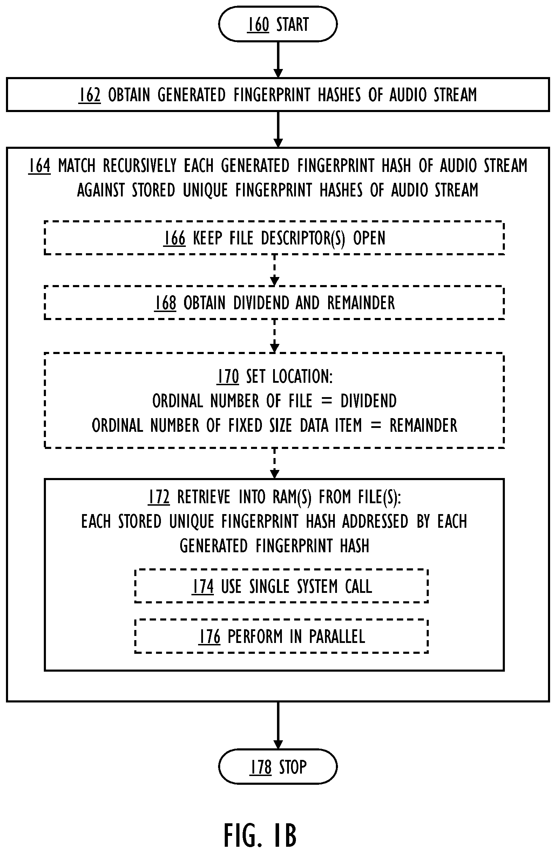

Let us study simultaneously FIG. 1A, which is a simplified structural block diagram, and FIG. 1B, which is a flow chart, both illustrating embodiments of an apparatus 100 for processing fingerprint hashes of an audio stream 152.

The apparatus 100 comprises one or more hardware caches 114, 124. Each hardware cache 114, 124 is configured to store one or more files 116, 126. Each file 116, 126 contains a part 118, 128 of a fixed size continuous data structure 122. The fixed size continuous data structure 122 contains fixed size data items 120, 130. Each fixed size data item 120, 130 represents a stored unique fingerprint hash.

In an embodiment, the fixed size continuous data structure 122 comprises a fixed size array, and each fixed size data item 120, 130 comprises a fixed size row of the fixed size array representing each stored unique fingerprint hash.

In an embodiment, numerical representations of indexes of the fixed size data items 120, 130 in the fixed size continuous data structure 122 represent stored unique fingerprint hashes.

For example, let us suppose that the size of each fixed size data item 120, 130 is 504 bytes, and that the unique fingerprint hash values occupy every single value of a 32-bit positive integer. This means that there are 2³² = 4 294 967 296 different values. The fixed size continuous data structure 122 uses 504 ^{∗} 4 294 967 296 = 2 156 073 582 592 bytes = 2156 gigabytes = 2.2 terabytes.

If the number of tracks in fixed size continuous data structure 122 is only a few hundred thousand and the lookups are not too frequent, a conventional SQL database or object storage is sufficient to handle the load. Even so, indexing every fingerprint hash will consume a massive amount of the random access memory 108 and this drives up the cost. In order to handle several hundred thousand simultaneous audio streams in a cost efficient manner, a fixed size continuous data structure 122 and fast random access read times of the one or more hardware caches 114, 124 are needed.

In an embodiment, the one ore more hardware caches 114, 124 comprise one or more solid-state drives (SSD). SSD may use integrated circuit assemblies to store data persistently (or in a non non-volatile manner). An advantage of the SSD is a quicker access time and a lower latency.

The apparatus 100 comprises one or more processors 102 configured to cause performance of the apparatus 100.

The apparatus 100 also comprises one or more random access memories (RAM) 108.

In an embodiment, the apparatus comprises one or more read-only memories (ROM) 104 including computer program code 106, and the one or more processors 102 are configured to execute the computer program code 106 to cause performance of the apparatus 100.

In an embodiment, the one or more processors 102 comprise a circuitry configured to cause the performance of the apparatus 100.

Consequently, the apparatus 100 may be implemented as one or more physical units, or as a service implemented by one or more networked server apparatuses. The physical unit may be a computer or another type of a general-purpose off-the-shelf computing device, as opposed to a purpose-build proprietary equipment, whereby research & development costs will be lower as only the special-purpose software (and not the hardware) needs to be designed, implemented, and tested. However, if highly optimized performance is required, the physical unit may be implemented with proprietary integrated circuits. The networked server apparatus may be a networked computer server, which operates according to a client-server architecture, a cloud computing architecture, a peer-to-peer system, or another applicable distributed computing architecture.

A non-exhaustive list of implementation techniques for the processor 102 and the one or more memories 104, 108 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 104, 108 refers to a device that is capable of storing data run-time (= random access memory, or working memory) or permanently (= read only memory, or non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 106 may be written by a suitable programming language (such as C, C++, assembler or machine language, for example), and the resulting executable code may be stored in the read only memory 104 and run by the processor 102. The computer program code 106 implements an algorithm 150 illustrated in FIG. 1B in more detail. The computer program code 106 may be in source code form, object code form, executable form, or in some intermediate form, but for use in the one or more processors 102 it is in the executable form. There are many ways to structure the computer program code 106: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 106 for performing a wide variety of standard operations. In addition, an operating system (such as a general-purpose operating system or a real-time operating system) may provide the computer program code 106 with system services.

An embodiment provides a computer-readable medium 140 storing the computer program code 106, which, when loaded into the one or more processors 102 and executed by one or more processors 102, causes the one or more processors 102 to perform the algorithm 150. The computer-readable medium 140 may comprise at least the following: any entity or device capable of carrying the computer program code 106 to the one or more processors 102, a record medium, a computer memory, a read-only memory, an electrical carrier signal, a telecommunications signal, and a software distribution medium. In some jurisdictions, depending on the legislation and the patent practice, the computer-readable medium 140 may not be the telecommunications signal. In an embodiment, the computer-readable medium 140 is a computer-readable storage medium. In an embodiment, the computer-readable medium 140 is a non-transitory computer-readable storage medium.

The algorithm starts in 160 and ends in 178. The operations are not strictly in chronological order in FIG. 1B, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

In 162, generated fingerprint hashes of an audio stream 152 are obtained.

The fingerprint hashes may have been generated so that the audio stream 152 is first transformed from a time-domain to a frequency-domain (using a spectrogram describing audio amplitudes at different frequencies over time, for example), and then the audio stream 152 is analyzed in the frequency-domain to detect the peaks with high amplitudes, from which fingerprint hashes are then generated using a suitable constellation. This may be performed as in the Shazam algorithm, also with various enhancements, such as using a highest peak, two second highest peaks, and also amplitude differences between the highest peak and each of the two second highest peaks, as described in the co-pending patent application.

In 164, each generated fingerprint hash 110 of the audio stream 152 is recursively matched against stored unique fingerprint hashes 112 of the tracks using match time offsets between the audio stream and each track in order to identify the audio stream.

In order to match an audio stream 152 to the available music in a storage, some known good music needs to be indexed. Two data structures may be created, a track data structure (not illustrated in FIG. 1A) and the fixed size continuous data structure 122.

The matching in 164 comprises retrieving in 172 into the one or more random access memories 108 from one of the one or more files 116, 126, each stored unique fingerprint hash 112 addressed by each generated fingerprint hash 110 and represented by each fixed size data item 120, 130.

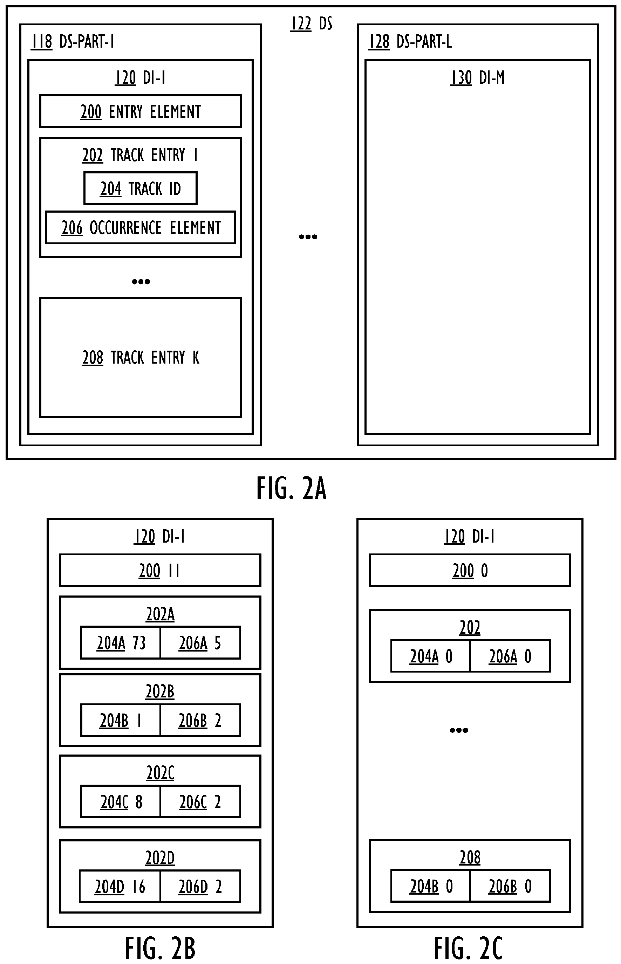

In an embodiment illustrated in FIG. 2A, each fixed size data item 120, 130 representing the stored unique fingerprint hash contains a fixed size entry element 200 indicating a number of entries for the stored unique fingerprint hash, and a predetermined number of fixed size track entries 202, 208. Each fixed size track entry 202, 208 contains a fixed size track identifier 204 of a track containing the stored unique fingerprint hash, and a fixed size occurrence element 206 indicating a number of times the track contains the stored unique fingerprint hash.

FIG. 2B illustrates an example of the data item 120 (representing a specific fingerprint hash), the fixed size entry element 200 contains a value "11", and four fixed size track entries 202A, 202B, 202C, 202D each indicating the number of times the track contains the stored unique fingerprint hash:
- for a fixed size track entry 204A with a value "73", a value of a fixed size occurrence element 206A is "5";
- for a fixed size track entry 204B with a value "1", a value of a fixed size occurrence element 206B is "2";
- for a fixed size track entry 204C with a value "8", a value of a fixed size occurrence element 206C is "2"; and
- for a fixed size track entry 204D with a value "16", a value of a fixed size occurrence element 206D is "2".

Note that the value "11" of the fixed size entry element 200 is the sum of the values "5" + "2" + "2" + "2" of the fixed size occurrence elements 206A, 206B, 206C, 206D.

The fixed size track entries 202A, 202B, 202C, 202D may form a list, which is ordered from the most occurrences to the fewest occurrences as shown in FIG. 2B.

As illustrated in FIG. 2C, as the continuous data structure 122 is of a fixed size, each fixed size entry element 120 uses the memory even if the fixed size entry element 200 contains a value 0" indicating no entries. Note that there are no meaningful values in the fixed size track entries 200, 208, and they may be initialized to values "0".

In an embodiment, the fixed size entry element 200 indicates a true number of tracks known to contain the stored unique fingerprint hash of the fixed size data item, even if the true number of the tracks exceeds the number of entries, and the true number is used as a weight coefficient for a relevance of the stored unique fingerprint hash in the matching in 164. For example, if the true number is 10 000, the weight coefficient for the specific fingerprint hash may be set low as it is so common that its ability to distinguish is quite poor.

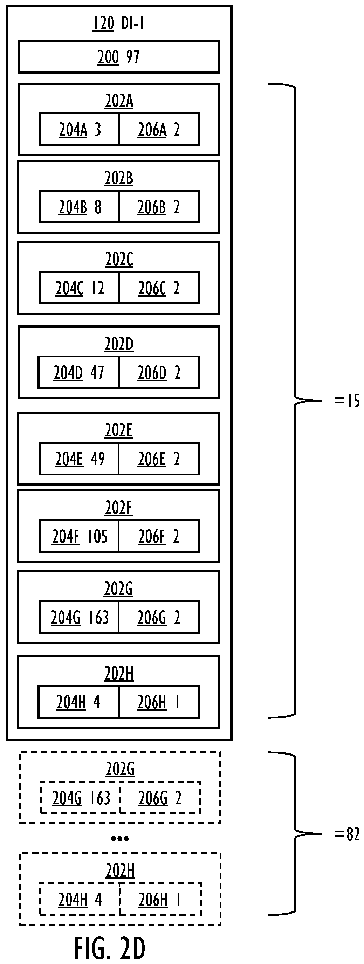

FIG. 2D illustrates an example. Let us suppose that the fixed size of the continuous data structure 122 allows storage of only eight fixed size track entries 202A, 202B, 202C, 202D, 202E, 202F, 202G, 202H, and the sum of their fixed size occurrence elements 206A, 206B, 206C, 206D, 206E, 206F, 206G, 206H in the fixed size entry element 200 would be "15". However, as shown in the bottom of FIG. 2D, there is knowledge that the fingerprint hash of the specific fixed size data item 120 is also in numerous other tracks, and if there were more memory space, additional fixed size track entries 202G, 202H would be stored. But as there is not enough space, only the sum "82" from fixed size occurrence elements 206G, 206H of the missing fixed size entry elements 202G, 202H is added to the fixed size entry element 200. As shown in FIG. 2D, the fixed size entry element 200 then contains the correct count 95 (= 15 + 82).

In an embodiment, the fixed size data items 120, 130 in the fixed size continuous data structure 122 are arranged in a numerical order running from one stored unique fingerprint hash to another stored unique fingerprint hash. As an example, let us assume that unique values of fingerprint hashes are every possible value the fingerprint hash expressed as a 32-bit string. The values of the fingerprint hash are then in an ascending order:
00000000000000000000000000000000;
00000000000000000000000000000001;
00000000000000000000000000000010;
00000000000000000000000000000011;
11111111111111111111111111111110; and
11111111111111111111111111111111.

In an embodiment, the matching in 164 comprises two operations. First, a dividend and a remainder are obtained in 168 by
- dividing a numerical value of a specific stored unique fingerprint hash
- by a numerical value obtained by
   -- dividing a numerical value of a count of the stored unique fingerprint hashes by a numerical value of a count of the one or more files 116, 126.

Next, a location of the specific stored unique fingerprint hash is set in 170 so that
- the dividend is set as an ordinal number for the file 116, and
- the remainder is set as an ordinal number of a fixed size data item 120 in a part 118 of the fixed size continuous data structure 122 in the file 116 with the dividend as the ordinal number.

For example, let us suppose that the size of the each fixed size data item 120, 130 is 504 bytes, the fixed size continuous data structure 122 is split into one hundred files 116, 126, and the total number of fingerprint hashes is one thousand. Now, for the fingerprint hash value "353", the calculation is 353 / (1000 / 100) = 353 / 10, which gives the dividend value "35" and the quotient value "3". The dividend may be obtained by a division operation, and the quotient may be obtained by a modulo operation. The dividend is set as an ordinal number for the file 116, which means in our example that the fingerprint hash value "353" is in the tenth file. The remainder is set as an ordinal number of a fixed size data item 120 in a part 118 of the fixed size continuous data structure 122 in the file 116, which means in our example that the fingerprint hash value "353" is the third fixed size data item in the tenth file.

In an embodiment, the retrieving 172 comprises using in 174 a single system call (syscall) to access one hardware cache 114 of the one or more hardware caches 114, 124 to retrieve the fixed size data item 120.

In an embodiment, the matching in 164 comprises keeping in 166 a file descriptor open to each file 116, 126, and the retrieving in 172 comprises performing in 176 the retrieving from the files 116, 126 in parallel.

Consequently, even if no track contains a certain fingerprint hash, the size of each fixed size data item 120, 130 is always constant (such as 504 bytes). This means that when a certain fingerprint hash needs to be retrieved, its exact location is calculated and only one simple syscall is needed to load the entire fixed size data item 120, 130 into the random access memory 108. This means that if we put the fixed size continuous data structure 122 on just one hardware cache 114, then its random read speed may be the exact number of lookups that is done per second. For example, if the read speed of the hardware cache 114 is one IOPS (input or output operations per second), and one IOPS typically reads 1024 or more bytes at a time, then the fixed size data item 120, 130 with a size of 504 bytes fits and is read in a single IOPS. If we increase the amount of hardware caches (such as solid-state drives) 114, 124 (through a raid configuration or via code split, for example) to distribute the files 116, 126 to different directories, an almost linear performance gain equal to the number of used hardware caches 114, 124 is obtained.

As explained earlier, the fixed size continuous data structure 122 may require 2.2 terabytes of storage space. On an ext4 filesystem it is possible to have this as a single huge file, but it is far from optimal. The inventors have benchmarked a lot of different file sizes and for a current implementation, the data is split in 2¹⁴ or 16384 even sized files 116, 126 resulting in about 132 megabytes per file. The optimal number of files may be different from machine to machine and may depend mostly on the available hardware, file system, operating system and file descriptors. As explained, the apparatus 100 may keep a file descriptor open to every single file 116, 126 and run access on these files 116, 126 in parallel.

To take advantage of the one or more hardware caches 114, 124, listeners (= apparatuses monitoring various audio streams) may be tweaked a little bit. This is because individual fingerprint hash positions are not known, but it is only known how many unique fingerprint hashes the audio stream 152 shares with each track and how common each fingerprint hash is among other tracks. Based on this information, the track that has the best potential to be the one looked for is fetched, and then an analysis is done (using a sequence of matches, or streaks, for example, as described in the co-pending application). If the fetched track does not match, then a second best candidate (if there is one) is fetched, and this is repeated until a track is found. When a match is detected, other potential candidates may still be looked up, or if the detected match is satisfactory, the (real-time online) track may be let to finish before trying to look for a new one.

Since the total file size of one hashed track is quite small - about 10 kilobytes - it makes sense to cache these tracks in various places. If a listener per radio station is deployed, then a previously matched track has a high chance of reoccurring within a week. If there is an appropriate API (application programming interface) for getting the tracks or fingerprint hashes from the radio station, then these may benefit from being cached as well.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An apparatus (150) for processing fingerprint hashes of an audio stream, comprising:
one or more hardware caches (114, 124), each hardware cache (114, 124) configured to store one or more files (116, 126), each file (116, 126) containing a part (118, 128) of a fixed size continuous data structure (122), and the fixed size continuous data structure (122) containing fixed size data items (120, 130), each fixed size data item (120, 130) representing a stored unique fingerprint hash;
one or more random access memories (108); and
one or more processors (102) configured to cause performance of at least the following:
obtaining (162) generated fingerprint hashes of an audio stream (152);
matching (164) recursively each generated fingerprint hash (110) of the audio stream (152) against stored unique fingerprint hashes (112) of the tracks using match time offsets between the audio stream and each track in order to identify the audio stream;
wherein the matching (164) comprises retrieving (172), into the one or more random access memories (108) from one of the one or more files (116, 126), each stored unique fingerprint hash (112) addressed by each generated fingerprint hash (110) and represented by each fixed size data item (120, 130).

2. The apparatus of claim 1, wherein the fixed size continuous data structure (122) comprises a fixed size array, and each fixed size data item (120, 30) comprises a fixed size row of the fixed size array representing each stored unique fingerprint hash.

3. The apparatus of any preceding claim, wherein numerical representations of indexes of the fixed size data items (120, 130) in the fixed size continuous data structure (122) represent stored unique fingerprint hashes.

4. The apparatus of any preceding claim, wherein each fixed size data item (120, 130) representing the stored unique fingerprint hash contains a fixed size entry element (200) indicating a number of entries for the stored unique fingerprint hash, and a predetermined number of fixed size track entries (202, 208), and each fixed size track entry (202, 208) contains a fixed size track identifier (204) of a track containing the stored unique fingerprint hash, and a fixed size occurrence element (206) indicating a number of times the track contains the stored unique fingerprint hash.

5. The apparatus of claim 4, wherein the fixed size entry element (200) indicates a true number of tracks known to contain the stored unique fingerprint hash of the fixed size data item, even if the true number of the tracks exceeds the number of entries, and the true number is used as a weight coefficient for a relevance of the stored unique fingerprint hash in the matching (164).

6. The apparatus of any preceding claim, wherein the fixed size data items (120, 130) in the fixed size continuous data structure (122) are arranged in a numerical order running from one stored unique fingerprint hash to another stored unique fingerprint hash.

7. The apparatus of claim 6, wherein the matching (164) comprises:
obtaining (168) a dividend and a remainder by dividing a numerical value of a specific stored unique fingerprint hash by a numerical value obtained by dividing a numerical value of a count of the stored unique fingerprint hashes by a numerical value of a count of the one or more files (116, 126); and
setting (170) a location of the specific stored unique fingerprint hash so that the dividend is set as an ordinal number for the file (116), and the remainder is set as an ordinal number of a fixed size data item (120) in a part (118) of the fixed size continuous data structure (122) in the file (116) with the dividend as the ordinal number.

8. The apparatus of any preceding claim, wherein the retrieving (172) comprises using (174) a single system call to access one hardware cache (114) of the one or more hardware caches (114, 124) to retrieve the fixed size data item (120).

9. The apparatus of any preceding claim, wherein the matching (164) comprises keeping (166) a file descriptor open to each file (116, 126), and the retrieving (172) comprises performing (176) the retrieving from the files (116, 126) in parallel.

10. The apparatus of any preceding claim, wherein the one ore more hardware caches (114, 124) comprise one or more solid-state drives.

11. The apparatus of any preceding claim, further comprising:
one or more read-only memories (104) including computer program code (106);
and wherein the one or more processors (102) are configured to execute the computer program code (106) to cause performance of the apparatus.
